# EUROPEAN PATENT APPLICATION

(11) **EP 4 550 513 A1**
(43) Date of publication of application: **07.05.2025**
(21) Application number: 23831075.9
(22) Date of filing: 13.06.2023
(51) Int. Cl.: H01M 10/0587, H01M 10/0525, H01M 10/0562, H01M 10/0566, H01M 50/107, H01M 50/152, H01M 50/184, H01M 50/342

(54) **SEALED BATTERY**

(30) Priority: 28.06.2022 JP 2022103365
(71) Applicant: Panasonic Energy Co., Ltd., Osaka 570-8511 (JP)
(72) Inventor: NOGAMI Takahiro, Kadoma-shi, Osaka 571-0057 (JP)
(74) Representative: Eisenführ Speiser
(86) International application number: PCT/JP2023/021875
(87) International publication number: WO 2024/004627

(57) **Abstract**

This sealed battery comprises a bottomed and cylindrical exterior can with an opening portion, a seal assembly closing the opening portion, and a wound electrode assembly housed in the exterior can. The bottom portion of the exterior can or the seal assembly is provided with an exhaust valve. Of the end portions in the winding-axis direction of an outer-most peripheral end of the electrode assembly, the one closer to the exhaust valve is fixed by a first fixing member, and the one farther from the exhaust valve is fixed by a second fixing member. A value obtained by dividing the heat conductivity in the thickness direction of the first fixing member by the volume of the first fixing member is smaller than a value obtained by dividing the heat conductivity in the thickness direction of the second fixing member by the volume of the second fixing member.

## Description

### TECHNICAL FIELD

The present disclosure generally relates to a sealed battery.

### BACKGROUND ART

In recent years, battery modules comprising a plurality of sealed batteries have been used for automotive batteries or the like, and not only the safety of individual sealed batteries but also the safety of the module itself is extremely important. In general, at least one of a bottom of an exterior housing can and a sealing assembly of a sealed battery is provided with an exhaust vent for discharging gas generated inside the battery in the event that the internal pressure of the battery increases due to abnormal heat generation or the like. For example, PATENT LITERATURE 1 discloses a cylindrical battery in which a bottom of an exterior housing can is annularly reduced in thickness to define an exhaust vent so that the area percentage of the exhaust vent is greater than or equal to 10% of the area of the bottom.

### CITATION LIST

### PATENT LITERATURE

PATENT LITERATURE 1: International Publication No. WO 2014/045569

### SUMMARY

In the event that gas is not smoothly discharged through the exhaust vent, a so-called lateral rupture may occur in which a side wall of an exterior housing can ruptures. If, for example, a lateral rupture of an exterior housing can occurs in a battery module, the heat of the high-temperature gas is propagated to nearby batteries and the like. Thus, it is an important challenge to prevent the lateral rupture of the exterior housing can. The inventors of the present application have intensively studied and found that the lateral rupture of the exterior housing can is easily caused by the fact that, when the generated gas fills the inside of the battery without reaching the exhaust vent, the electrode assembly is pressed against the exhaust vent, causing the clogging of the exhaust vent and making it impossible to release the internal pressure. In PATENT LITERATURE 1, the clogging of the exhaust vent has not been studied, and therefore, there is still much room for improvement.

It is an advantage of the present disclosure to provide a sealed battery that can prevent rupture of a side wall of an exterior housing can.

A sealed battery of an aspect of the present disclosure includes a bottomed cylindrical exterior housing can that has an opening, a sealing assembly with which the opening is capped, and a wound-type electrode assembly that is housed in the exterior housing can, wherein an exhaust vent is provided in any one of a bottom of the exterior housing can and the sealing assembly, out of both ends in a winding axis direction of an outermost circumferential end of the electrode assembly, an end closer to the exhaust vent is fixed by a first fixing member, and an end farther from the exhaust vent is fixed by a second fixing member, and a value obtained by dividing a thermal conductivity in a thickness direction of the first fixing member by a volume of the first fixing member is smaller than a value obtained by dividing a thermal conductivity in a thickness direction of the second fixing member by a volume of the second fixing member.

A sealed battery of another aspect of the present disclosure includes a bottomed cylindrical exterior housing can that has an opening, a sealing assembly with which the opening is capped, and a wound-type electrode assembly that is housed in the exterior housing can, wherein in a case where exhaust vents are provided in both of a bottom of the exterior housing can and the sealing assembly, out of the exhaust vents, an exhaust vent having a greater area is defined as a first exhaust vent and an exhaust vent having a smaller area is defined as a second exhaust vent, out of both ends in a winding axis direction of an outermost circumferential end of the electrode assembly, an end closer to the first exhaust vent is fixed by a first fixing member, and an end closer to the second exhaust vent is fixed by a second fixing member, and a value obtained by dividing a thermal conductivity in a thickness direction of the first fixing member by a volume of the first fixing member is smaller than a value obtained by dividing a thermal conductivity in a thickness direction of the second fixing member by a volume of the second fixing member.

According to the sealed battery of an aspect of the present disclosure, rupture of the side wall of the exterior housing can may be prevented.

### BRIEF DESCRIPTION OF DRAWING

FIG. 1 is an axial sectional view of a cylindrical battery which is an example of an embodiment.
FIG. 2 is a perspective view of an electrode assembly included in the cylindrical battery illustrated in FIG. 1.
FIG. 3 is an axial sectional view of a cylindrical battery which is another example of the embodiment.
FIG. 4 is a perspective view of an electrode assembly included in the cylindrical battery illustrated in FIG. 2.

### DESCRIPTION OF EMBODIMENTS

Hereinafter, embodiments of the present disclosure will be described in detail with reference to the drawings. The embodiments described below are merely exemplary, and the present disclosure is not limited to the following embodiments. The shapes, materials, and piece counts, and other particulars described below are provided for the purpose of illustration and may be appropriately changed depending on specifications of sealed batteries. In the following description, equivalent components in all the drawings are denoted by the same reference signs, and redundant description will be omitted. In a second embodiment, any further description of the operational effect and modified example similar to a first embodiment will be omitted.

### <First Embodiment>

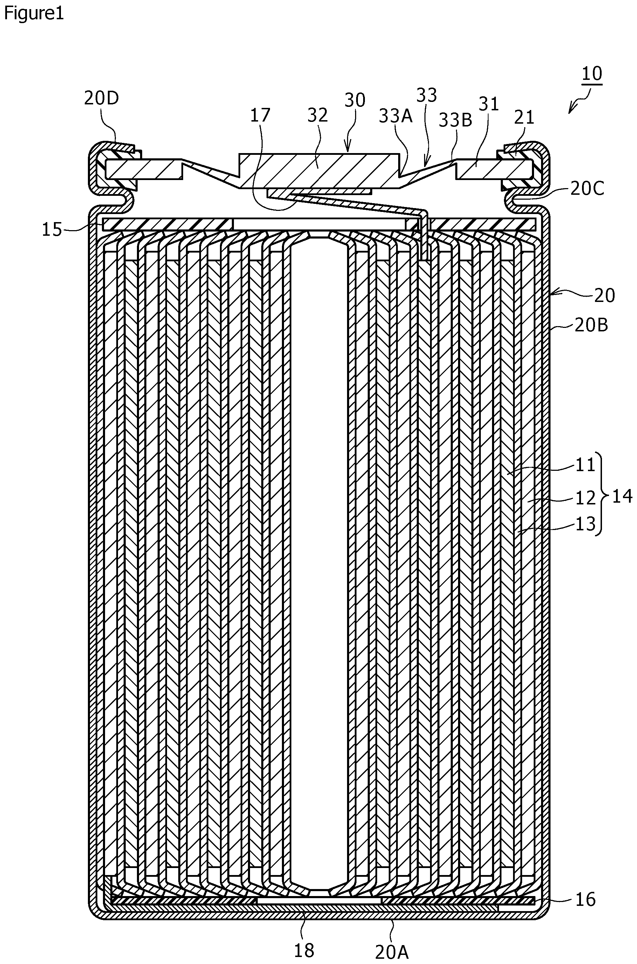

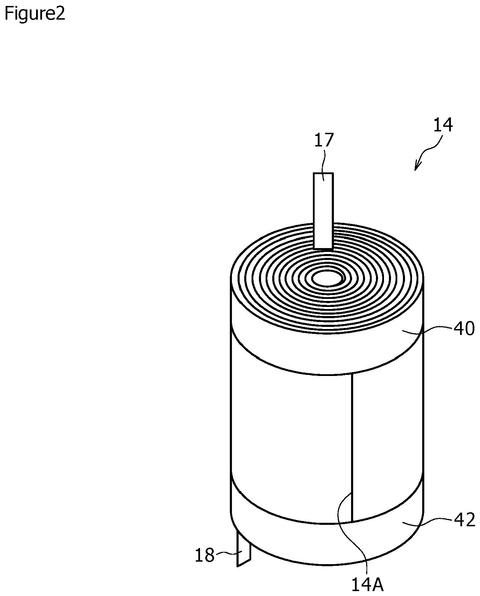

Hereinafter, a cylindrical battery 10 of an example of an embodiment will be described with reference to FIGS. 1 and 2.

FIG. 1 is an axial sectional view of the cylindrical battery 10. In the cylindrical battery 10, a sealing assembly 30 side (an opening side of an exterior housing can 20) is defined as "upper", and a bottom 20A side of the exterior housing can 20 is defined as "lower". As illustrated in FIG. 1, the cylindrical battery 10 includes the bottomed cylindrical exterior housing can 20 that has an opening in an upper portion, the sealing assembly 30 with which the opening is capped, and a wound-type electrode assembly 14. The electrode assembly 14 is housed in the exterior housing can 20 so that a winding axis is substantially parallel to an up and down direction of the exterior housing can 20.

The electrode assembly 14 includes a positive electrode 11, a negative electrode 12, and a separator 13, and has a wound structure in which the positive electrode 11 and the negative electrode 12 are spirally wound with the separator 13 interposed therebetween. Any of the positive electrode 11, the negative electrode 12, and the separator 13 is formed in a band shaped, and spirally wound around a winding core disposed along the winding axis to be alternately stacked in the radial direction of the electrode assembly 14.

The positive electrode 11 has, for example, a positive electrode core, and a positive electrode mixture layer formed on at least one surface of the core. Examples of the positive electrode core may include a foil of metal such as aluminum or an aluminum alloy, which is stable within a potential range of the positive electrode 11, and a film in which such a metal is disposed on a surface layer thereof. The positive electrode mixture layer includes a positive electrode active material, a conductive agent such as acetylene black, and a binder such as polyvinylidene fluoride, and is preferably formed on each side of the positive electrode core. Examples of the positive electrode active material include a lithium-transition metal composite oxide. The positive electrode 11 can be produced by applying a positive electrode mixture slurry including a positive electrode active material, a conductive agent, a binder, and the like on the positive electrode core, drying the resulting coating film, and then compressing the coating film to form a positive electrode mixture layer on each surface of the core.

The negative electrode 12 has, for example, a negative electrode core, and a negative electrode mixture layer formed on at least one surface of the core. Examples of the negative electrode core may include a foil of a metal such as copper or a copper alloy, which is stable within a potential range of the negative electrode 12, and a film in which such a metal is disposed on a surface layer thereof. The negative electrode mixture layer includes a negative electrode active material and a binder such as styrene-butadiene rubber (SBR), and is preferably formed on each side of the negative electrode core. As the negative electrode active material, graphite, and a silicon-containing compound is used, for example. The negative electrode 12 can be produced by applying a negative electrode mixture slurry including a negative electrode active material, a binder, and the like on the negative electrode core, drying the resulting coating film, and then compressing it to form a negative electrode mixture layer on each side of the core.

As the separator 13, porous sheet having ion permeability and an insulation property is used, for example. Specific examples of the porous sheet include a microporous thin film, a woven fabric, and a nonwoven fabric. The material of the separator is preferably an olefin resin such as polyethylene or polypropylene, a cellulose, or the like. The separator 13 may be a laminate having a cellulose fiber layer and a thermoplastic resin fiber layer such as an olefin resin. The separator 13 may be a multilayer separator including a polyethylene layer and a polypropylene layer, and the separator 13 used may also be a separator applied with material such as an aramid resin or ceramic on the surface of the separator 13.

The cylindrical battery 10 has insulating plates 15 and 16 disposed on the upper and lower sides of the electrode assembly 14, respectively. In the example illustrated in FIG. 1, a positive electrode lead 17 connected to the positive electrode 11 extends to the sealing assembly 30 side through a through hole of the insulating plate 15, and a negative electrode lead 18 connected to the negative electrode 12 extends to the bottom 20A side of the exterior housing can 20 along the outside of the insulating plate 16. The positive electrode lead 17 is connected, by welding or the like, to a bottom surface of a terminal 32 of the sealing assembly 30, and the sealing assembly 30 serves as a positive electrode external terminal. The negative electrode lead 18 is connected, by welding or the like, to an inner surface of the bottom 20A of the exterior housing can 20, and the exterior housing can 20 serves as a negative electrode external terminal.

The exterior housing can 20 is a bottomed cylindrical metal container including the bottom 20A and a side wall 20B. The bottom 20A has a disk shape, and the side wall 20B is formed into a cylindrical shape along an outer circumferential edge of the bottom 20A. A grooved portion 20C is formed into an annular shape along a circumferential direction of the exterior housing can 20 to have a part of the side wall 20B configured to project to the inside in the vicinity of the opening of the exterior housing can 20. A crimping portion 20D is formed into an annular shape along the circumferential direction of the exterior housing can 20 at the opening end.

The exterior housing can 20 houses an electrolyte in addition to the electrode assembly 14. As the electrolyte, a non-aqueous electrolyte is used, for example. The non-aqueous electrolyte includes a non-aqueous solvent, and an electrolyte salt dissolved in the non-aqueous solvent. Examples of the non-aqueous solvent may include esters, ethers, nitriles, amides, and mixed solvents containing two or more selected from the foregoing. The non-aqueous solvent may contain a halogen-substituted product obtained by substituting at least some of hydrogen atoms in these solvents with a halogen atom such as fluorine. Note that the non-aqueous electrolyte is not limited to a liquid electrolyte and may be a solid electrolyte. As the electrolyte salt, a lithium salt such as LiPF₆ is used. The kind of the electrolyte is not limited to a particular kind of electrolyte, but may also be an aqueous electrolyte.

The sealing assembly 30 is fixed by crimping to the opening of the exterior housing can 20 with a gasket 21 interposed therebetween. More specifically, the sealing assembly 30 is supported by the grooved portion 20C of the exterior housing can 20, and is fixed by crimping by the crimping portion 20D of the exterior housing can 20.

The sealing assembly 30 is formed into a substantial disk shape in plan view, and is produced by pressing a plate material made of, for example, aluminum or an aluminum alloy. The sealing assembly 30 functions as an exhaust vent that discharges gas out of the cylindrical battery 10 when the internal pressure of the cylindrical battery 10 increases at the time of abnormality of the cylindrical battery 10.

The sealing assembly 30 has a flange 31 that is fixed, by crimping, to the opening of the exterior housing can 20, and the terminal 32 that is formed on a radial inside with respect to the flange 31, and a thin thickness portion 33 that connects the flange 31 and the terminal 32.

The flange 31 is a portion that is supported by the grooved portion 20C of the exterior housing can 20, and that is fixed by crimping by the crimping portion 20D of the exterior housing can 20. The flange 31 is formed into an annular shape. An outer end 33B of the thin thickness portion 33 is connected to an upper portion of an inner circumferential surface of the flange 31.

The terminal 32 is a portion to which the positive electrode lead 17 is joined, and serves as a positive electrode internal terminal. In order to connect a plurality of cylindrical batteries 10 to one another so that the cylindrical batteries 10 are formed as an assembled battery, a lead plate can be joined to the upper surface of the terminal 32. The terminal 32 is formed into a substantial disk shape. An inner end 33A of the thin thickness portion 33 is connected to a lower portion of an outer circumferential surface of the terminal 32.

The thin thickness portion 33 is a portion that connects the terminal 32 and the flange 31 as described above. The thin thickness portion 33 is formed into an annular shape. The thin thickness portion 33 is formed to be inclined upward from the radial inside to the radial outside of the sealing assembly 30. Furthermore, the thin thickness portion is formed into a tapered shape from the radial inside toward the radial outside of the sealing assembly. The thin thickness portion 33 is formed so that the outer end 33B is smaller in thickness (a length in the up and down direction) than the inner end 33A and the thickness of the outer end 33B is minimized.

The thin thickness portion 33 is a portion that ruptures when the internal pressure of the cylindrical battery 10 increases. In the case where the internal pressure of the cylindrical battery 10 increases, the sealing assembly 30 is pressed upward by the gas pressure, the thin thickness portion 33 is inverted from a state of being inclined upward from the radial inside toward the radial outside to a state of being inclined downward, and the outer end 33B of the thin thickness portion 33 ruptures, whereby a gas discharge port is formed.

Next, the electrode assembly 14 will be described with reference to FIG. 2. FIG. 2 is a perspective view of the electrode assembly 14. The electrode assembly 14 has a wound structure in which the positive electrode 11 and the negative electrode 12 are spirally wound with the separator 13 interposed therebetween, as described above. The positive electrode lead 17 extends axially from a substantially central position in the radial direction of the electrode assembly 14 at an upper end of the electrode assembly 14. The negative electrode lead 18 extends axially from a radially outer position of the electrode assembly 14 at a lower end of the electrode assembly 14.

Upper and lower ends of the outermost circumferential end 14A of the electrode assembly 14 are fixed by a first fixing member 40 and a second fixing member 42 (hereinafter, the first fixing member 40 and the second fixing member 42 are collectively referred to as fixing members 40 and 42). In the present embodiment, the separator 13 is exposed on the outermost circumference of the electrode assembly 14, and the outermost circumferential end 14A is a winding finish-side end of the separator 13. Note that the negative electrode 12 may be exposed on the outermost circumference of the electrode assembly 14. The fixing members 40 and 42, which are members for fixing the outermost circumferential end 14A to the electrode assembly 14, are attached so as to cover at least a part of the outermost circumferential end 14A. Note that it is only required that the fixing members 40 and 42 fix both ends of the outermost circumferential end 14A in the winding axis direction (upper and lower ends and their vicinities, for example, a range up to 25% of a height in the winding axis direction of the electrode assembly 14 from the upper and lower ends), and the present disclosure is not limited to a case where the upper and lower ends of the outermost circumferential end 14A are fixed.

In the present embodiment, lengths of the fixing members 40 and 42 are substantially the same as the circumferential length (a length of one circumference) of the outermost circumferential surface of the electrode assembly 14, and one end of each of the fixing members 40 and 42 in the longitudinal direction contacts the other end thereof. Note that the lengths of the fixing members 40 and 42 may be smaller than the length of the outermost circumference of the electrode assembly 14 so that one end of each of the fixing members 40 and 42 in the longitudinal direction does not overlap with the other end thereof, or the lengths of the fixing members 40 and 42 may be greater than the length of the outermost circumference of the electrode assembly 14 so that one end of each of the fixing members 40 and 42 in the longitudinal direction overlaps with the other end thereof.

A width of each of the fixing members 40 and 42 is, for example, less than or equal to 25% of the axial height of the electrode assembly 14. A lower value of the width of each of the fixing members 40 and 42 is preferably 3%, and more preferably 5% with respect to the axial height of the electrode assembly 14. The width of each of the fixing members 40 and 42 is, for example, greater than or equal to 3 mm and less than or equal to 30 mm, and may be greater than or equal to 5 mm and less than or equal to 15 mm. A thickness of each of the fixing members 40 and 42 is, for example, greater than or equal to 20 µm and less than or equal to 200 µm, and may be greater than or equal to 50 µm and less than or equal to 100 µm.

The fixing members 40 and 42 each are an adhesive tape including, for example, a substrate layer and an adhesive layer. The substrate layer may be appropriately selected from viewpoints of strength, resistance against the electrolyte liquid, processability, cost, and the like, and for example, PP (polypropylene), PI (polyimide), PET (polyethylene terephthalate), PPS (polyphenylene sulfide) or the like may be used. The adhesive layer is preferably a resin having adhesiveness at room temperature, and for example, an acrylic resin and a rubber resin may be used.

In the present embodiment, the exhaust vent is provided in the sealing assembly 30 out of the bottom 20A of the exterior housing can 20 and the sealing assembly 30. That is, out of both ends in the winding axis direction of the outermost circumferential end 14A of the electrode assembly 14, one closer to the exhaust vent is fixed by the first fixing member 40, and one farther from the exhaust vent is fixed by the second fixing member 42. The thermal conductivities in the thickness direction and thicknesses of the first fixing member 40 and the second fixing member 42 satisfy the relationship of (thermal conductivity of first fixing member 40) / (volume of first fixing member 40) < (thermal conductivity of second fixing member 42) / (volume of second fixing member 42). This makes it possible to prevent rupture of the side wall 20B of the exterior housing can 20. Portions to which the fixing members are fixed are less likely to radiate heat at the time of abnormality. The fixing member provided on a side closer to the exhaust vent is less likely to radiate heat than the fixing member provided on a side farther from the exhaust vent, causing thermal runaway on the side closer to the exhaust vent. Thus, since the thermal runaway can be controlled so that the origin of the ignition is in the vicinity of the exhaust vent, the generated gas is less likely to be accumulated in the exterior housing can 20, which makes it possible to prevent the lateral rupture.

The thickness of the first fixing member 40 that fixes one closer to the exhaust vent out of both ends in the winding axis direction of the outermost circumferential end 14A of the electrode assembly 14 may be greater than the thickness of the second fixing member 42 that fixes one farther from the exhaust vent. That is, the thicknesses of the first fixing member 40 and the second fixing member 42 may satisfy the relationship of (thickness of first fixing member 40) > (thickness of second fixing member 42). For example, 1.1 ≤ (thickness of first fixing member 40) / (thickness of second fixing member 42) ≤ 2.

The area of the first fixing member 40 that fixes one closer to the exhaust vent out of both ends in the winding axis direction of the outermost circumferential end 14A of the electrode assembly 14 may be greater than the area of the second fixing member 42 that fixes one farther from the exhaust vent. That is, the areas of the first fixing member 40 and the second fixing member 42 may satisfy the relationship of (area of first fixing member 40) > (area of second fixing member 42). For example, 1.1 ≤ (area of first fixing member 40) / (area of second fixing member 42) ≤ 3.

The thermal conductivity in the thickness direction of the first fixing member 40 that fixes one closer to the exhaust vent out of both ends in the winding axis direction of the outermost circumferential end 14A of the electrode assembly 14 may be lower than the thermal conductivity in the thickness direction of the second fixing member 42 that fixes one farther from the exhaust vent. That is, the thermal conductivities of the first fixing member 40 and the second fixing member 42 may satisfy the relationship of (thermal conductivity of first fixing member 40) < (thermal conductivity of second fixing member 42). For example, PP may be used as the substrate layer of the second fixing member 42 while PI is used as the substrate layer of the first fixing member 40.

The present disclosure is not limited to the above-described first embodiment. The exhaust vent may be provided not in the sealing assembly 30 but in the bottom 20 of the exterior housing can 20. In this case, the first fixing member 40 is disposed on the lower side of the electrode assembly 14, and the second fixing member 42 is disposed on the upper side of the electrode assembly 14.

### <Second Embodiment>

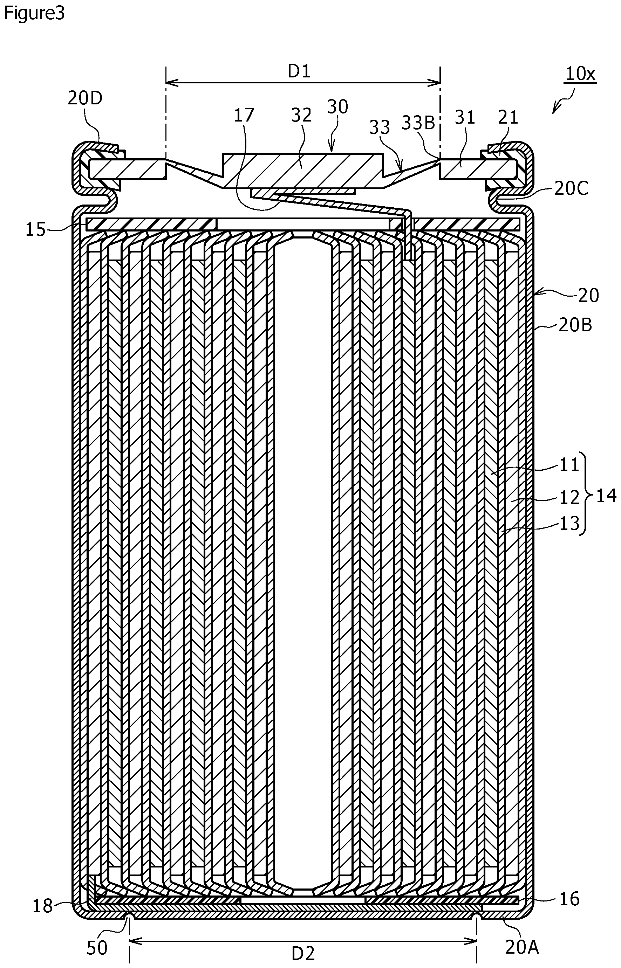

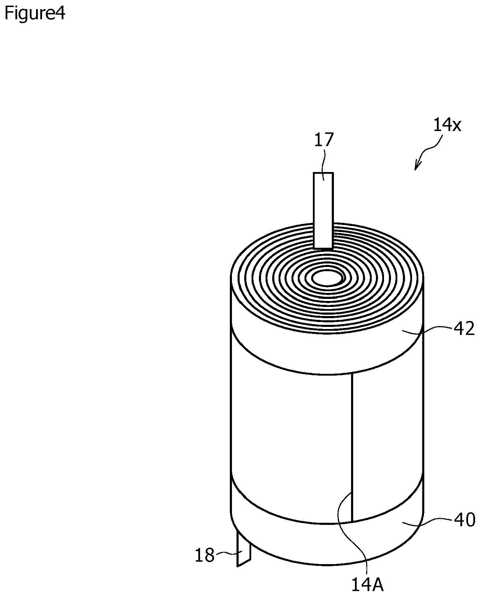

Next, a cylindrical battery 10x of another example of the embodiment will be described with reference to FIGS. 3 and 4. In the following embodiment, the same components as in the first embodiment are denoted by the same reference numerals as in the first embodiment, and descriptions thereof are omitted. In the following embodiment, any further description of the operational effect and modified example similar to the first embodiment will be omitted.

FIG. 3 is an axial sectional view of the cylindrical battery 10x which is another example of the embodiment. The cylindrical battery 10x includes a groove 50 in the bottom 20A of the exterior housing can 20. When the internal pressure of the cylindrical battery 10x increases at the time of abnormality, the groove 50 ruptures, and gas is discharged from the ruptured portion. That is, In the cylindrical battery 10x, the exhaust vents are provided in both of the bottom 20A of the exterior housing can 20 and the sealing assembly 30. The groove 50 is formed into an annular shape along the circumferential direction of the exterior housing can 20, for example. The depth of the groove 50 is, for example, greater than or equal to 0.3 times and less than or equal to 0.7 times the thickness of the bottom 20A except for the groove 50.

In the present embodiment, a diameter D2 of a circle formed by the groove 50 is greater than a diameter D1 of a circle formed by the outer end 33B. That is, the area of the exhaust vent provided in the bottom 20A is greater than the area of the exhaust vent provided in the sealing assembly 30.

In a case where the exhaust vent having a greater area is defined as a first exhaust vent and the exhaust vent having a smaller area is defined as a second exhaust vent, as illustrated in FIG. 4, out of both ends in the winding axis direction of the outermost circumferential end 14A of an electrode assembly 14x, one closer to the first exhaust vent is fixed by the first fixing member 40, and one closer to the second exhaust vent is fixed by the second fixing member 42. A value obtained by dividing the thermal conductivity in the thickness direction of the first fixing member 40 by the volume of the first fixing member 40 is smaller than a value obtained by dividing the thermal conductivity in the thickness direction of the second fixing member 42 by the volume of the second fixing member 42. In the present embodiment, the first exhaust vent is provided in the bottom 20A of the exterior housing can 20, and the second exhaust vent is provided in the sealing assembly 30. The thermal conductivities in the thickness direction and volumes of the first fixing member 40 and the second fixing member 42 satisfy the relationship of (thermal conductivity of first fixing member 40) / (volume of first fixing member 40) < (thermal conductivity of second fixing member 42) / (volume of second fixing member 42). This makes it possible to prevent rupture of the side wall 20B of the exterior housing can 20. The fixing member provided on a side closer to the first exhaust vent is less likely to radiate heat than the fixing member provided on a side closer to the second exhaust vent, causing thermal runaway on the side closer to the first exhaust vent. Thus, since the thermal runaway can be controlled so that the origin of the ignition is in the vicinity of the first exhaust vent having a greater area, the generated gas is less likely to be accumulated in the exterior housing can 20, which makes it possible to prevent the lateral rupture.

The thickness of the first fixing member 40 that fixes one closer to the first exhaust vent out of both ends in the winding axis direction of the outermost circumferential end 14A of the electrode assembly 14x may be greater than the thickness of the second fixing member 42 that fixes one closer to the second exhaust vent. That is, the thicknesses of the first fixing member 40 and the second fixing member 42 may satisfy the relationship of (thickness of first fixing member 40) > (thickness of second fixing member 42). For example, 1.1 ≤ (thickness of first fixing member 40) / (thickness of second fixing member 42) ≤ 2.

The area of the first fixing member 40 that fixes one closer to the first exhaust vent out of both ends in the winding axis direction of the outermost circumferential end 14A of the electrode assembly 14x may be greater than the area of the second fixing member 42 that fixes one closer to the second exhaust vent. That is, the areas of the first fixing member 40 and the second fixing member 42 may satisfy the relationship of (area of first fixing member 40) > (area of second fixing member 42). For example, 1.1 ≤ (area of first fixing member 40) / (area of second fixing member 42) ≤ 3.

The thermal conductivity in the thickness direction of the first fixing member 40 that fixes one closer to the first exhaust vent out of both ends in the winding axis direction of the outermost circumferential end 14A of the electrode assembly 14x may be lower than the thermal conductivity in the thickness direction of the second fixing member 42 that fixes one closer to the second exhaust vent. That is, the thermal conductivities in the thickness direction of the first fixing member 40 and the second fixing member 42 may satisfy the relationship of (thermal conductivity of first fixing member 40) < (thermal conductivity of second fixing member 42). For example, PI may be used as the substrate layer of the first fixing member 40 while PP is used as the substrate layer of the second fixing member 42.

The present disclosure is not limited to the above-described second embodiment. The area of the exhaust vent provided in the bottom 20A may be smaller than the area of the exhaust vent provided in the sealing assembly 30. In this case, the exhaust vent provided in the bottom 20A is defined as the second exhaust vent, and the exhaust vent provided in the sealing assembly 30 is defined as the first exhaust vent. Furthermore, the first fixing member 40 is disposed on the upper side of the electrode assembly 14x, and the second fixing member 42 is disposed on the lower side of the electrode assembly 14x.

As described above, according to the sealed battery of the present disclosure, rupture of the side wall of the exterior housing can can be prevented.

The present disclosure will be further described by using the following embodiments.

### Arrangement 1:

A sealed battery including a bottomed cylindrical exterior housing can that has an opening, a sealing assembly with which the opening is capped, and a wound-type electrode assembly that is housed in the exterior housing can, wherein
an exhaust vent is provided in any one of a bottom of the exterior housing can and the sealing assembly,
out of both ends in a winding axis direction of an outermost circumferential end of the electrode assembly, an end closer to the exhaust vent is fixed by a first fixing member, and an end farther from the exhaust vent is fixed by a second fixing member, and
a value obtained by dividing a thermal conductivity in a thickness direction of the first fixing member by a volume of the first fixing member is smaller than a value obtained by dividing a thermal conductivity in a thickness direction of the second fixing member by a volume of the second fixing member.

### Arrangement 2:

The sealed battery according to arrangement 1, wherein a thickness of the first fixing member is greater than a thickness of the second fixing member.

### Arrangement 3:

The sealed battery according to arrangement 1 or 2, wherein an area of the first fixing member is greater than an area of the second fixing member.

### Arrangement 4:

The sealed battery according to any one of arrangements 1 to 3, wherein a thermal conductivity in a thickness direction of the first fixing member is lower than a thermal conductivity in a thickness direction of the second fixing member.

### Arrangement 5:

A sealed battery including a bottomed cylindrical exterior housing can that has an opening, a sealing assembly with which the opening is capped, and a wound-type electrode assembly that is housed in the exterior housing can, wherein
in a case where exhaust vents are provided in both of a bottom of the exterior housing can and the sealing assembly, and out of the exhaust vents, an exhaust vent having a greater area is defined as a first exhaust vent and an exhaust vent having a smaller area is defined as a second exhaust vent,
out of both ends in a winding axis direction of an outermost circumferential end of the electrode assembly, an end closer to the first exhaust vent is fixed by a first fixing member, and an end closer to the second exhaust vent is fixed by a second fixing member, and
a value obtained by dividing a thermal conductivity in a thickness direction of the first fixing member by a volume of the first fixing member is smaller than a value obtained by dividing a thermal conductivity in a thickness direction of the second fixing member by a volume of the second fixing member.

### Arrangement 6:

The sealed battery according to arrangement 5, wherein a thickness of the first fixing member is greater than a thickness of the second fixing member.

### Arrangement 7:

The sealed battery according to arrangement 5 or 6, wherein an area of the first fixing member is greater than an area of the second fixing member.

### Arrangement 8:

The sealed battery according to any one of arrangements 5 to 7, wherein a thermal conductivity in a thickness direction of the first fixing member is lower than a thermal conductivity in a thickness direction of the second fixing member.

### REFERENCE SIGNS LIST

10, 10x Cylindrical battery, 11 Positive electrode, 12 Negative electrode, 13 Separator, 14, 14x Electrode assembly, 14A Outermost circumferential end, 15, 16 Insulating plate, 17 Positive electrode lead, 18 Positive electrode lead, 20 Exterior housing can, 20A Bottom, 20B Side wall, 20C Grooved portion, 20D Crimping portion, 21 Gasket, 30 Sealing assembly, 31 Flange. 32 Terminal, 33 Thin thickness portion, 33A Inner end, 33B Outer end, 40 First fixing member, 42 Second fixing member, 50 Impressed portion

## Claims

1. A sealed battery, comprising: a bottomed cylindrical exterior housing can that has an opening; a sealing assembly with which the opening is capped; and a wound-type electrode assembly that is housed in the exterior housing can, wherein
an exhaust vent is provided in any one of a bottom of the exterior housing can and the sealing assembly,
out of both ends in a winding axis direction of an outermost circumferential end of the electrode assembly, an end closer to the exhaust vent is fixed by a first fixing member, and an end farther from the exhaust vent is fixed by a second fixing member, and
a value obtained by dividing a thermal conductivity in a thickness direction of the first fixing member by a volume of the first fixing member is smaller than a value obtained by dividing a thermal conductivity in a thickness direction of the second fixing member by a volume of the second fixing member.

2. The sealed battery according to claim 1, wherein a thickness of the first fixing member is greater than a thickness of the second fixing member.

3. The sealed battery according to claim 1, wherein an area of the first fixing member is greater than an area of the second fixing member.

4. The sealed battery according to claim 1, wherein a thermal conductivity in a thickness direction of the first fixing member is lower than a thermal conductivity in a thickness direction of the second fixing member.

5. A sealed battery, comprising: a bottomed cylindrical exterior housing can that has an opening; a sealing assembly with which the opening is capped; and a wound-type electrode assembly that is housed in the exterior housing can, wherein
in a case where exhaust vents are provided in both of a bottom of the exterior housing can and the sealing assembly, and out of the exhaust vents, an exhaust vent having a greater area is defined as a first exhaust vent and an exhaust vent having a smaller area is defined as a second exhaust vent,
out of both ends in a winding axis direction of an outermost circumferential end of the electrode assembly, an end closer to the first exhaust vent is fixed by a first fixing member, and an end closer to the second exhaust vent is fixed by a second fixing member, and
a value obtained by dividing a thermal conductivity in a thickness direction of the first fixing member by a volume of the first fixing member is smaller than a value obtained by dividing a thermal conductivity in a thickness direction of the second fixing member by a volume of the second fixing member.

6. The sealed battery according to claim 5, wherein a thickness of the first fixing member is greater than a thickness of the second fixing member.

7. The sealed battery according to claim 5, wherein an area of the first fixing member is greater than an area of the second fixing member.

8. The sealed battery according to claim 5, wherein a thermal conductivity in a thickness direction of the first fixing member is lower than a thermal conductivity in a thickness direction of the second fixing member.
